# EUROPÄISCHE PATENTSCHRIFT

(11) **EP 1 789 270 B1**
(45) Veröffentlichungstag und Bekanntmachung des Hinweises auf die Patenterteilung: **15.04.2009**
(21) Anmeldenummer: 05791593.6
(22) Anmeldetag: 26.08.2005
(51) Int. Cl.: B60G 17/00

(54) **FEDERUNGSSYSTEM**
SUSPENSION SYSTEM
SYSTEME DE SUSPENSION

(30) Priorität: 14.09.2004 DE 102004044244
(43) Veröffentlichungstag der Anmeldung: 30.05.2007
(73) Patentinhaber: Hydac System GmbH, 66280 Sulzbach/Saar (DE)
(72) Erfinder: HUTH, Heinz-Peter, 66802 Überherrn (DE)
(74) Vertreter: Bartels, Martin Erich Arthur
(86) Internationale Anmeldenummer: PCT/EP2005/009218
(87) Internationale Veröffentlichungsnummer: WO 2006/029696

(56) Entgegenhaltungen:
- EP-A- 0 424 784
- WO-A-02/064387
- DE-A1- 2 948 605
- DE-A1- 3 619 755
- DE-A1- 19 830 506
- GB-A- 1 461 361
- PATENT ABSTRACTS OF JAPAN Bd. 012, Nr. 179 (M-701), 26. Mai 1988 (1988-05-26) & JP 62 289418 A (KAYABA IND CO LTD), 16. Dezember 1987 (1987-12-16)

## Beschreibung

Die Erfindung betrifft ein Federungssystem, insbesondere für ein Hubgerüst eines Gabelstaplers, mit mindestens einem Hydrospeicher sowie mindestens einem Schaltventil zum Herstellen einer fluidführenden Verbindung mittels einer Steuerleitung zwischen dem Hydrospeicher und einem das Hubgerüst betätigbaren Arbeitszylinder und mit einer Heben- und Senkenleitung zum Ansteuern des Arbeitszylinders in eine angehobene bzw. abgesenkte Stellung.

Durch die WO 02/064387 A1 ist ein Federungssystem, insbesondere für eine Arbeitsmaschine, wie einen Traktor od. dgl., bekannt, mit einem mit unterschiedlichen Lastdrücken beaufschlagbaren Federungszylinder, dessen Kolben- und Stangenseite jeweils an einen Federungsspeicher über eine Absperreinrichtung (Schaltventil) anschließbar sind, die die Federung sperrt, und mit einer Ausgleichseinrichtung, die für die Ansteuerung der Kolbenseite des Federungszylinders innerhalb der Versorgungseinrichtung ein Schaltventil aufweist, sowie mit einer Druckversorgung für den Erhalt des benötigten Systemdruckes im Federungssystem. Dadurch, dass bei der bekannten Lösung die Ausgleichseinrichtung für die Ansteuerung der Stangenseite des Federungszylinders innerhalb der Versorgungseinrichtung ein weiteres Schaltventil aufweist und dass in einem Nebenzweig zu einer Leitung mit Teilen der Absperreinrichtung und dem zuordenbaren Federungsspeicher für die Kolbenseite des Federungszylinders eine Lastüberwachungseinrichtung geschaltet ist, die die Druckversorgung für den Erhalt des benötigten Systemdruckes ansteuert, ist es mit der Ausgleichseinrichtung möglich, vor erneuter Inbetriebnahme der Federung einen Druckausgleich des Systems auf den jeweils herrschenden Lastdruck vorzunehmen. Unabhängig von der Laständerung wird also bei dem bekannten Federungssystem ein Druckausgleich zwischen dem Federungszylinder und dem zugeordneten Federungsspeicher durchgeführt und somit eine unkontrollierte Bewegung der Achse beim Einschalten des Federungssystems vermieden. Dabei ist bei dem bekannten Federungssystem des weiteren vorgesehen, dass eine Sensoreinrichtung die jeweilige Arbeitsstellung des Betätigungskolbens im Federungszylinder überwacht und eine bereits kleine Bewegung im Bereich des Federungszylinders löst den angesprochenen Druckausgleich unabhängig von der Laständerung aus.

Dem Grunde nach könnte man die bekannte Lösung auch auf ein sog. Hubgerüst eines Gabelstaplers übertragen, bei dem mittels eines hydraulischen Arbeitszylinders Lasten angehoben und abgesenkt werden, um dergestalt einen Material- oder Gütertransport sicherzustellen. Die bekannte Lösung benötigt jedoch relativ viele Einbau- und Schaltkomponenten sowie zwei voneinander verschiedene Hydrospeicher einmal für die Kolbenseite, einmal für die Stangenseite des Federungszylinders, so dass insbesondere für einfach konzipierte Gabelstapler-Lösungen, wie sie die Regel sind, die bekannte Lösung bereits aus Kosten- und Gewichtsgründen nicht in Frage kommt.

In Übereinstimmung mit Merkmalen des Patentanspruches 1 ist durch die GB-A-1 461 361 ein Federungssystem bekannt mit mindestens zwei Hydrospeichern sowie mindestens einem Schaltventil zum Herstellen einer fluidführenden Verbindung mittels einer Steuerleitung zwischen dem jeweiligen Hydrospeicher und einem Arbeitszylinder unter Verwendung von Anschlußstellen für eine Hochdruckleitung und eine Niederdruckleitung, die jeweils zwischen Rückschlagventilen angeordnet sind, die paarweise mit ihrer jeweiligen Sperrichtung voneinander abgewandt bzw. einander zugewandt angeordnet sind. Mit Hilfe der Hochdruckleitung wird bei der bekannten Lösung ein Schaltventil über ein Nadelventil angesteuert und die Niederdruckleitung ist über ein sog. Shuttle-Ventil ansteuerbar. Die bekannte Niederdruckleitung sowie die Hochdruckleitung dienen somit nicht als sog. Heben- und Senkenleitung zum Ansteuern des jeweiligen Arbeitszylinders. Das bekannte Federungssystem setzt für seine Realisierung mindestens zwei Hydrospeicher voraus und ist im übrigen von der Ventilkonzeption her aufwendig gebaut, was mit entsprechendem Gewicht und Herstellkosten einhergeht.

Ausgehend von diesem Stand der Technik liegt der Erfindung die Aufgabe zugrunde, unter Beibehalten der Vorteile der bekannten Lösungen diese dahingehend weiter zu verbessern, dass sie bei derselben Funktionssicherheit weniger Einbaugewicht benötigen und im übrigen kostengünstig realisierbar sind. Eine dahingehende Aufgabe löst ein Federungssystem mit den Merkmalen des Patentanspruches 1 in seiner Gesamtheit.

Dadurch, dass gemäß dem kennzeichnenden Teil des Patentanspruches 1 die Heben- und die Senkenleitung jeweils in einen Hauptzweig münden, die parallel zueinander verlaufend jeweils mit einer Anschlußstelle vor und hinter dem Schaltventil in die Steuerleitung münden, dass in die Hauptzweige Ventile geschaltet sind, die für jeden Hauptzweig eine entgegengesetzte Wirk- oder Ansteuerrichtung haben und die in den beiden Hauptzweigen jeweils aus einem federbelasteten Rückschlagventil gebildet sind, und dass für die Heben- und die Senkenleitung die jeweiligen beiden Paare an Rückschlagventilen mit ihrer Sperrichtung einander zu- bzw. voneinander abgewandt sind, ist es möglich, mit nur wenigen Einbaukomponenten und insbesondere auch nur einem Hydrospeicher eine wirksame Lastdämpfung oder Federung bei dem Hubgerüst eines Gabelstaplers zu erreichen.

Mit der erfindungsgemäßen Lösung ist es erreicht, dass für einen Hebenvorgang über die Hebenleitung sowohl der Hydrospeicher als auch der Arbeitszylinder des Hubgerüstes mit demselben Arbeitsdruck beaufschlagt sind, wobei das Sperrventil seine gesperrte Stellung in der Steuerleitung einnimmt und bei betätigtem durchgeschalteten Schaltventil ist über die Steuerleitung der Arbeitszylinder fluidführend mit dem Hydrospeicher verbunden. Da nun beide Systeme denselben Arbeitsdruck haben, kommt es bei der derart hergestellten Verbindung nicht zu ungewollten Ein- oder Ausfahrbewegungen am Arbeitszylinder und mithin am Hubgerüst, sondern der genannte Hydrospeicher setzt für die Dämpfung oder Federung auf den Arbeitsdruck des Arbeitszylinders ein, so dass eine Bedienperson des Staplers, die die Federung oder Dämpfung zuschaltet, keine spürbare Systemreaktion im genannten Umfang erfährt.

Insbesondere ist mit dem erfindungsgemäßen Federungssystem eine Art hydraulische Graetz-Schaltung realisiert, die in ihrer Funktion besonders verläßlich ist, so dass Störungen nicht zu erwarten sind. Darüber hinaus sind die eingesetzten, federbelasteten Rückschlagventile kostengünstig zu erhalten, was insgesamt die Herstellkosten senken hilft. Ferner ist mit nur wenigen Einbaukomponenten eine funktionssichere Dämpfung oder Federung für den Stapler realisierbar, so dass sich das Einbaugewicht entsprechend reduzieren läßt, was bei Stapleranwendungen sinnvoll ist. Auch läßt sich dergestalt Einbauraum einsparen.

Weitere vorteilhafte Ausführungsformen des erfindungsgemäßen Federungssystems sind Gegenstand der weiteren Unteransprüche.

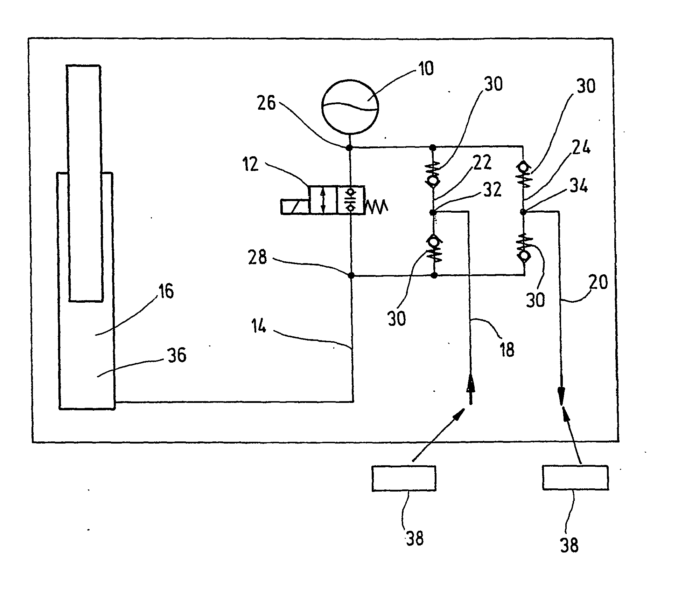

Im folgenden wird das erfindungsgemäße Federungssystem anhand eines Ausführungsbeispiels nach der Zeichnung näher erläutert. Dabei zeigt in prinzipieller und nicht maßstäblicher Darstellung die einzige Figur in der Art eines hydraulischen Schaltplanes den grundsätzlichen Aufbau des Federungssystems.

Das erfindungsgemäße Federungssystem nach der Figur dient insbesondere für ein Hubgerüst eines Gabelstaplers (nicht dargestellt). Das Federungssystem weist einen Hydrospeicher 10, insbesondere in der Art eines Membranspeichers, auf. Ferner ist ein Schaltventil 12 in der Art eines 2/2-WegeVentils vorhanden, das zum Herstellen einer fluidführenden Verbindung mittels einer Steuerleitung 14 zwischen dem Hydrospeicher 10 und einem das Hubgerüst betätigbaren Arbeitszylinder 16 dient. Ferner ist eine Hebenleitung 18 und eine Senkenleitung 20 vorgesehen zum Ansteuern des Arbeitszylinders 16 in eine angehobene bzw. abgesenkte Stellung. Wie des weiteren die Figur zeigt, münden die Hebenleitung 18 sowie die Senkenleitung 20 in jeweils einen ihnen zugeordneten Hauptzweig 22,24. Die beiden dahingehenden Hauptzweige 22,24 sind parallel zueinander verlaufend angeordnet und münden jeweils mit einer Anschlußstelle 26 und 28 vor und hinter dem Schaltventil 12 in die Steuerleitung 14. Ferner sind in die Hauptzweige 22,24 Ventile 30 geschaltet, die für jeden Hauptzweig 22,24 eine entgegengesetzte Wirk- oder Ansteuerrichtung haben.

Die beiden zugeordneten Ventile 30 eines jeden Hauptzweiges 22 oder 24 nehmen zwischen sich die jeweilige Anschlußstelle 32 bzw. 34 der zuordenbaren Heben- und Senkenleitung 18,20 auf.

Die Ventile 30 in den beiden Hauptzweigen 22,24 sind gemäß der Darstellung nach der Figur jeweils aus einem federbelasteten Rückschlagventil gebildet, wobei für jeden Hauptzweig 22,24 die Wirk- oder Ansteuerrichtung der zuordenbaren Ventile 30 entgegengesetzt ist. Mithin sind für die Hebenleitung 18 das jeweilige eine Paar an Rückschlagventilen mit ihrer Sperrichtung einander zugewandt und für die gegenüberliegende Senken leitung 20 voneinander abgewandt. Ferner sind alle Ventile 30, insbesondere in Form der Rückschlagventile, gleich ausgebildet, was zum einen die Funktionssicherheit erhöht und zum anderen die Herstellkosten senken hilft. Gemäß der Darstellung nach der Figur ist das Schaltventil 12 in Form des 2/2-Wege-Ventils in seiner unbetätigten Ausgangsstellung gezeigt, bei die fluidführende Verbindung zwischen Hydrospeicher 10 und Arbeitszylinder 16 gesperrt ist. In der betätigten, durchgeschalteten Stellung ist dann die dahingehende fluidführende Verbindung hergestellt. Ferner mündet die Steuerleitung 14 auf die Kolbenseite 36 des Arbeitszylinders 16. Die Hebenleitung 18 sowie die Senkenleitung 20 sind über eine nicht näher dargestellte übliche Steuervorrichtung mittels Schaltventilen 38 durch eine Bedienperson mit einem Druckmedium, beispielsweise Hydrauliköl, versorgbar bzw. ist dieses dergestalt über die Senkenleitung 20 ableitbar. Mithin sind die Ventile 30 in Form der Rückschlagventile in der Art einer hydraulischen Graetz-Schaltung fluidführend miteinander verschaltet. Anstelle der Rückschlagventile können natürlich auch andere Ventile mit vergleichbarer Wirkung hier eingesetzt werden.

Soll eine Last mittels des Arbeitszylinders 16 angehoben werden, ist das Schaltventil 12 in seiner in der Figur gezeigten Sperrstellung und über das Schaltventil 38 wird die Hebenleitung 18 mit einem Druckmedium versorgt, das die beiden gegenüberliegenden Rückschlagventile 30 öffnet, so dass dergestalt mit demselben Systemdruck der Kolben des Arbeitszylinders 16 angehoben wird und der Hydrospeicher 10 gefüllt ist. Die Senkenleitung 20 ist dabei über das Senkenventil 38 als Schaltventil gesperrt. Will nun die Bedienperson bzw. der Fahrer des Gabelstaplers eine Komforterhöhung, kann er für das Verfahren der Last das Schaltventil 12 in seine geöffnete Stellung verbringen und der Hydrospeicher 10 dient der Federung bzw. Lastdämpfung. Bei dem dahingehenden Zuschalten der Federung oder der Dämpfung steht sowohl auf der Kolbenseite 36 als auch auf der Fluidseite des Hydrospeichers 10 derselbe Systemdruck an, so dass es nicht ungewollt zu Ein- oder Ausfahrbewegungen auf der Kolbenstangenseite des Arbeitszylinders 16 kommt. Bis auf eine Komforterhöhung spürt also die Bedienperson an der Zuschaltung der Federung oder Dämpfung nichts. Vergleichbar verhält sich die Situation, wenn der Arbeitszylinder 16 zum Absenken einer Last einfährt. Dann wird das Schaltventil 38 für die Hebenleitung gesperrt und für die Senkenleitung 20 geöffnet. Bei nicht betätigtem Schaltventil 12, also bei abgeschalteter Dämpfung, strömt dann die Fluidmenge von Arbeitszylinder 16 und Hydrospeicher 10 gleichermaßen über die benachbarten Rückschlagventile 30 der Senkenleitung 20 zurück, indem diese in einer Aufeinanderzubewegung öffnen.

Mit der erfindungsgemäßen Schaltung ist es also möglich, durch die Anordnung der Rückschlagventile bei jeder Ansteuerung des Zylinders 16 Heben oder Senken den Hydrospeicher 10 auf dem Lastdruck zu halten, wobei hierfür eine getrennt voneinander verlaufende Hebenleitung 18 und Senkenleitung 20 notwendig sind. Die erfindungsgemäße Schaltung kann ferner vorzugsweise bei Flurförderfahrzeugen, wie die genannten Gabelstapler, eingesetzt werden; aber auch bei Baumaschinen einschließlich sogenannten Teleskopladern.

## Patentansprüche

1. Federungssystem, insbesondere für ein Hubgerüst eines Gabelstaplers, mit mindestens einem Hydrospeicher (10) sowie mindestens einem Schaltventil (12) zum Herstellen einer fluidführenden Verbindung mittels einer Steuerleitung (14) zwischen dem Hydrospeicher (10) und einem das Hubgerüst betätigbaren Arbeitszylinder (16) und mit einer Heben(18)- und Senkenleitung (20) zum Ansteuern des Arbeitszylinders (16) in eine angehobene bzw. abgesenkte Stellung, **dadurch gekennzeichnet, dass** die Heben(18)- und die Senkenleitung (20) jeweils in einen Hauptzweig (22,24) münden, die parallel zueinander verlaufend jeweils mit einer Anschlußstelle (26,28) vor und hinter dem Schaltventil (12) in die Steuerleitung (14) münden, dass in die Hauptzweige (22,24) Ventile (30) geschaltet sind, die für jeden Hauptzweig (22,24) eine entgegengesetzte Wirk- oder Ansteuerrichtung haben und die in den beiden Hauptzweigen (22,24) jeweils aus einem federbelasteten Rückschlagventil gebildet sind, und dass für die Heben (18)- und die Senkenleitung (20) die jeweiligen beiden Paare an Rückschlagventilen mit ihrer Sperrichtung einander zu- bzw. voneinander abgewandt sind.

2. Federungssystem nach Anspruch 1, **dadurch gekennzeichnet, dass** die beiden Ventile (30) eines jeden Hauptzweiges (22,24) zwischen sich die jeweilige Anschlußstelle (32,34) der zuordenbaren Heben(18)- und Senkenleitung (20) aufnehmen.

3. Federungssystem nach Anspruch 1 oder 2, **dadurch gekennzeichnet, dass** alle Ventile (30), insbesondere in Form der Rückschlagventile, gleich ausgebildet sind.

4. Federungssystem nach einem der Ansprüche 1 bis 3, **dadurch gekennzeichnet, dass** das Schaltventil (12) ein 2/2-Wege-Ventil ist, das in seiner unbetätigten Ausgangsstellung die fluidführende Verbindung zwischen Hydrospeicher (10) und Arbeitszylinder (16) sperrt.

5. Federungssystem nach einem der Ansprüche 1 bis 4, **dadurch gekennzeichnet, dass** der Hydrospeicher (10) ein Membranspeicher ist.

6. Federungssystem nach einem der Ansprüche 1 bis 5, **dadurch gekennzeichnet, dass** die Steuerleitung (14) an die Kolbenseite des Arbeitszylinders (16) angeschlossen ist.

7. Federungssystem nach einem der Ansprüche 1 bis 6, **dadurch gekennzeichnet, dass** die Heben(18)- und die Senkenleitung (20) über eine Steuervorrichtung mittels Schaltventilen (38) durch eine Bedienperson mit einem Druckmedium versorgbar bzw. dieses ableitbar ist.

8. Federungssystem nach einem der Ansprüche 1 bis 7, **dadurch gekennzeichnet, dass** die Ventile (30) in der Art einer Graetz-Schaltung fluidführend miteinander verbunden sind.

## Claims

1. A suspension system, in particular for the lifting structure of a fork-lift truck, comprising at least one hydraulic accumulator (10) and at least one control valve (12) for producing a fluid conducting connection between the hydraulic accumulator (10) and a working cylinder (16) actuating the lifting structure by means of a control line (14) and a lifting (18) and lowering line (20) for guiding the working cylinder (16) into a lifted or lowered position, **characterised in that** the lifting (18) and the lowering line (20) open out respectively into a main branch (22, 24) which, extending parallel to one another, respectively open out into the control line (14) with a connection point (26, 28) in front of and behind the control valve (12), that connected to the main branches (22, 24) are valves (30) which have an opposite operation or control direction for each main branch (22, 24) and which in both main branches (22, 24) are respectively formed by a spring-loaded check valve, and that for the lifting (18) and the lowering line (20) the respective two pairs of check valves face towards and away from one another with their blocking direction.

2. The suspension system according to Claim 1, **characterised in that** the two valves (30) of each main branch (22,24) accommodate between them the respective connection point (32, 34) of the assignable lifting (18) and lowering line (20).

3. The suspension system according to Claim 1 or 2, **characterised in that** all of the valves (30), in particular in the form of check valves, are of the same design.

4. The suspension system according to any of Claims 1 to 3, **characterised in that** the control valve (12) is a 2/2 directional valve which in its non-actuated initial position blocks the fluid conducting connection between the hydraulic accumulator (10) and the working cylinder (16).

5. The suspension system according to any of Claims 1 to 4, **characterised in that** the hydraulic accumulator (10) is a membrane accumulator.

6. The suspension system according to any of Claims 1 to 5, **characterised in that** the control line (14) is connected to the piston side of the working cylinder (16).

7. The suspension system according to any of Claims 1 to 6, **characterised in that** the lifting (18) and the lowering line (20) can be supplied with a pressure medium, or the latter can be discharged, via a control apparatus by means of control valves (38) by an operator.

8. The suspension system according to any of Claims 1 to 7, **characterised in that** the valves (30) are connected to one another such as to conduct fluid in the manner of a bridge circuit.

## Revendications

1. Système de suspension, notamment pour un cadre de levage d'un chariot élévateur, comprenant au moins un hydroaccumulateur (10) ainsi qu'au moins une vanne (12) de commutation pour ménager une liaison fluidique, au moyen d'une ligne (14) de commande entre l'hydroaccumulateur (10) et un vérin (16) de travail pouvant actionner le cadre de levage et une ligne (18) de levage et une ligne (20) d'abaissement pour commander le vérin (16) de travail et le mettre dans une position soulevée ou abaissée, **caractérisé en ce que** la ligne (18) de levage et la ligne (20) d'abaissement débouchent respectivement dans des branches (22,24) principales qui, en s'étendant parallèlement l'une à l'autre, débouchent respectivement par un point (26,28) de raccordement devant et derrière la vanne (12) de commutation de la ligne (14) de commande, **en ce que** dans les branches (22,24) principales sont montées des vannes (30) qui, pour chaque branche (22,24) principale, ont un dispositif d'action ou de commande opposés et qui, dans les deux branches (22,24) principales, sont formées respectivement d'un clapet anti-retour soumis à l'action d'un ressort, et **en ce que**, pour la ligne (18) de levage et la ligne (20) d'abaissement, les deux paires de clapet anti-retour respectives sont rapprochées ou éloignées l'une de l'autre dans leur sens de blocage.

2. Système de suspension suivant la revendication 1, **caractérisé en ce que** les deux vannes (30) de chaque branche (22,24) principale reçoivent entre elles les points (32,34) respectifs de raccordement de la ligne (18) de levage et de la ligne (20) d'abaissement qui peuvent être associées.

3. Système de suspension suivant la revendication 1 ou 2, **caractérisé en ce que** toutes les vannes (30), notamment sous la forme des clapets anti-retour, sont constituées de la même façon.

4. Système de suspension suivant l'une des revendications 1 à 3, **caractérisé en ce que** la vanne (12) de commutation est une vanne (2/2) voies qui, dans sa position de départ non actionnée, bloque la liaison fluidique entre l'hydroaccumulateur (10) et le vérin (16) de travail.

5. Système de suspension suivant l'une des revendications 1 à 4, **caractérisé en ce que** l'hydroaccumulateur (10) est un accumulateur à membrane.

6. Système de suspension suivant l'une des revendications 1 à 5, **caractérisé en ce que** la ligne (14) de commande est raccordée au côté piston du vérin (16) de travail.

7. Système de suspension suivant l'une des revendications 1 à 6, **caractérisé en ce que** la ligne (18) de levage et la ligne (20) d'abaissement peuvent être alimentées en un fluide sous pression par une personne de service par l'intermédiaire d'un dispositif de commande au moyen de vannes (38) de commutation ou ce fluide peut en être évacué.

8. Système de suspension suivant l'une des revendications 1 à 7, **caractérisé en ce que** les vannes (30) communiquent entre elles fluidiquement à la façon d'un circuit de Graetz.
